(19)

Europäisches
Patentamt
European
Patent Office
Office européen
des brevets

(11) **EP 2 397 885 A1**

(12) **EUROPEAN PATENT APPLICATION**
published in accordance with Art. 153(4) EPC

(43) Date of publication:
**21.12.2011 Bulletin 2011/51**

(21) Application number: **09843065.5**

(22) Date of filing: **29.10.2009**

(51) Int Cl.:
***G02F 1/1335*** *(2006.01)*

(86) International application number:
**PCT/JP2009/068560**

(87) International publication number:
**WO 2010/116559 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009080884**

(71) Applicant: **Sharp Kabushiki Kaisha**
**Osaka-shi, Osaka 545-8522 (JP)**

(72) Inventors:
• **YASHIRO, Yuji**
**Osaka-shi, OSAKA 545-8522 (JP)**
• **KAIDA Kazuya**
**Osaka-shi, OSAKA 5458522 (JP)**

• **KADOWAKI, Shinya**
**Osaka-shi, OSAKA 545-8522 (JP)**
• **KUNIMASA, Fumie**
**Osaka-shi, OSAKA 545-8522 (JP)**
• **ISHIDA, Takeshi**
**Osaka-shi, OSAKA 545-8522 (JP)**
• **SHIGETA, Hiroaki**
**Osaka-shi, OSAKA 545-8522 (JP)**
• **YUKI, Ryuzo**
**Osaka-shi, OSAKA 545-8522 (JP)**

(74) Representative: **Rocke, Carsten**
**Müller-Boré & Partner**
**Grafinger Strasse 2**
**D-81671 München (DE)**

(54) **DISPLAY PANEL AND DISPLAY DEVICE**

(57) A liquid crystal display panel (39) includes a diffraction grating (DG) that is provided on the side of the inner surface (32N) of an opposed substrate (32) for receiving light and is used for enhancing the light output efficiency from the inner surface (32N) to the outside.

FIG.1

EP 2 397 885 A1

## Description

## Technical Field

The present invention relates to a display panel like, for example, a liquid crystal display panel, and a display device (e.g., a liquid crystal display device) that incorporates the display panel.

## Background Art

In a liquid crystal display device that is able to perform color display, a color filter is incorporated in a liquid crystal display panel in many cases. And, directly under the color filter, a liquid crystal display panel, which incorporates a fluorescent body for emitting fluorescent light that has the same color as the color filter, also is present (e.g., a patent document 1).

## Citation List

## Patent Literature

PLT1: JP-A-1992-012323

## Summary of Invention

## Technical Problem

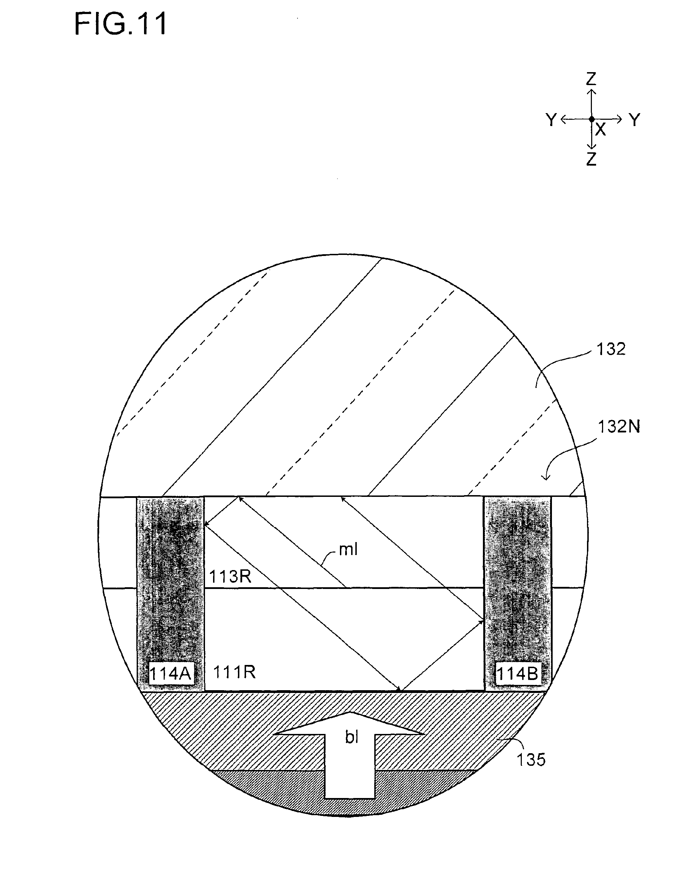

A problem, which occurs in the liquid crystal display panel in which such a fluorescent body and a color filter are stacked up, is as follows. As shown in a partially enlarged view of Fig. 11, in the liquid crystal display panel, a fluorescent body 111R receives blue light (backlight; bl) from a backlight unit and performs fluorescent light emission to emit red light (R). And, this light travels in various directions. For example, part (light ml) of the light from the fluorescent body 111R travels in the inside of a red color filter 113R and reaches an inside surface 132N of a color filter base board 132.

In such a case, an incident angle of the light ml with respect to the inside surface 132N (in detail, an interface between the color filter 113R and the inside surface 132N) exceeds a critical angle in some cases. In this case, the light ml is totally reflected by the inside surface 132N to travel, for example, to a black matrix 114A.

The black matrix 114A has reflectiveness rather than transmissiveness. Because of this, the light reaching the black matrix 114A is totally reflected to travel, for example, to a band-pass filter 135 which transmits blue light but reflects red light. Because of this, the light reaching the band-pass filter 135 is reflected to travel to a black matrix 114B. And, the light reaching the black matrix 114B is reflected to travel to the inside surface 132N of the color filter base board 132.

In this way, the incident angle of the light reaching the inside surface 132N exceeds again the critical angle at the inside surface 132N in some cases. And, such light travels to the black matrix 114A; and further, repeating the reflection, travels to the band-pass filter 135, the black matrix 114B and the inside surface 132N.

In other words, of the light emitted from the fluorescent body 111R, the light, whose incident angle to the inside surface 132N is not smaller than the critical angle, cannot pass through the inside surface 132N and cannot exit to outside. Because of this, in such a liquid crystal display device, the amount of light exiting from the red color filter 113R decreases (in other words, the ratio (light output efficiency) of the amount of light exiting to outside to the amount of light emitted from the fluorescent body 111R is relatively low).

The present invention has been made to solve the above problems. And, it is an object of the present invention is to provide a display panel that improves light output efficiency; and a display device that incorporates the display panel.

## Solution to Problem

The display panel includes: a light-supply amount control portion that controls a supply amount of light; a fluorescent body that receives the light from the light-supply amount control portion and performs fluorescent light emission; and a transmission base board that transmits the light from the fluorescent body. And, in the display panel, on a light receiving surface of the transmission base board that receives the light, a light output structure, which improves output efficiency from the light receiving surface to outside, is formed. For example, the light output structure is a diffraction grating.

According to this, even if an incident angle of the light with respect to the light receiving surface of the transmission base board is larger than a critical angle, the light is diffracted (diffraction transmission and diffraction reflection) by the diffraction grating without being totally reflected. In this case, the amount of light that is guided to outside via the light receiving surface increases from the amount of light that is guided to outside via a light receiving surface (light receiving surface that deos not have the diffraction grating and the like) which causes the total reflection. Because of this, such a display panel is able to efficiently guide the light to outside.

Here, it is desirable that a grating piece of the diffraction grating is a pillar body (e.g., a rectangular parallelepiped body or a circular cylindrical body).

Besides, it is desirable that the the diffraction grating includes a polygonal-shape (e.g., a triangular shape or a quadrangular shape) grating pattern.

Besides, it is desirable that the grating piece of the diffraction grating is a bar-shape body whose longest edge is along a grating surface of the diffraction grating;

a part of a plurality of the bar-shape bodies are arranged along a first direction that intersects with a longitudinal direction of themselves, whereby a stripe-shape first grating pattern is formed; and

another part of the plurality of the bar-shape bodies are arranged along a second direction that intersects with the first direction, whereby a stripe-shape second grating pattern is formed.

Besides, it is desirable that the grating piece constituting the diffraction grating is a ring-shape body; and the diffraction pattern is composed of concentric circles that are formed of a plurality of the ring-shape bodies which share a center with each other.

Here, in the display panel, it is desirable that a relational expression (1) described below is met:

$$0.5\gamma \leq d \leq 3\gamma \cdots \text{relational expression (1)}$$

where

$\gamma$: an excitation wavelength for exciting fluorescent light

$d$: a periodic interval of the grating piece of the diffraction grating

Besides, in the display panel, it is desirable that a relational expression (2) described below is met:

$$0.5d \leq H \leq 3d \cdots \text{relational expression (2)}$$

where

$d$: the periodic interval of the grating piece of the diffraction grating

$H$: a height of the grating piece from the grating surface of the diffraction grating

Here, it is desirable that between the diffraction grating and the fluorescent body, a color filter in accordance with a color of the light derived from the fluorescent light emission is interposed. According to this, color purity of the light traveling to outside improves.

Besides, it is desirable that the fluorescent body and the color filter are enclosed by a reflective light blocking member. According to this, between the color filters having different colors, light having different colors does not travel. Because of this, the color purity of the light traveling to outside surely improves.

Here, it is desirable that the reflective light blocking member is formed of a metal (e.g., aluminum or silver).

Besides, the reflective light blocking member may be a band-pass filter that is able to interfere with at least a partial wavelength region of an entire region of visible light.

Here, it is possible to say that a display device, which includes the above display panel; and an illumination device that supplies light to the display panel, is also the present invention.

**Advantageous Effects of Invention**

According to the display panel of the present invention, even light (in short, light that is totally reflected), which impinges on the light receiving surface of the transmission base board at a relatively large incident angle, is able to pass through the light receiving surface. Because of this, such display panel is able to efficiently guide the light to outside.

**Brief Description of Drawings**

[Fig. 1] is a partially enlarged view of Fig. 2.

[Fig. 2] is a sectional view seen along an A-A' line in Fig. 10.

[Fig. 3] is a plan view showing an opposite base board that includes a diffraction grating (where a grating pattern has a quadrangular shape) which is formed of a circular cylindrical grating piece.

[Fig. 4] is a plan view showing an opposite base board that includes a diffraction grating (where a grating pattern has a triangular shape) which is formed of a circular cylindrical grating piece.

[Fig. 5] is a plan view showing an opposite base board that includes a diffraction grating (where a grating pattern has a quadrangular shape) which is formed of a rectangular parallelepiped grating piece.

[Fig. 6] is a plan view showing an opposite base board that includes a diffraction grating (where a grating pattern has a triangular shape) which is formed of a rectangular parallelepiped grating piece.

[Fig. 7] is a plan view showing an opposite base board that includes a diffraction grating which is formed of a bar-shape grating piece.

[Fig. 8] is a plan view showing an opposite base board that includes a diffraction grating which is formed of grating pieces that are arranged concentrically.

[Fig. 9] is a light path view showing diffracted light at an opposite base board that includes a diffraction grating.

[Fig. 10] is an exploded perspective view of a liquid crystal display device.

[Fig. 11] is a light path view showing reflected light at an inside surface of an opposite base board that is incorporated in a conventional liquid crystal display device.

## Description of Embodiments

[Embodiment 1]

An embodiment is described based on drawings as follows. Here, for convenience, there is a case where a hatching, a member reference number and the like are omitted; in such a case, other drawings are referred to. Besides, a black dot in a drawing means a direction perpendicular to the paper surface. Besides, numerical examples described are only examples, and the numerical values are not limiting.

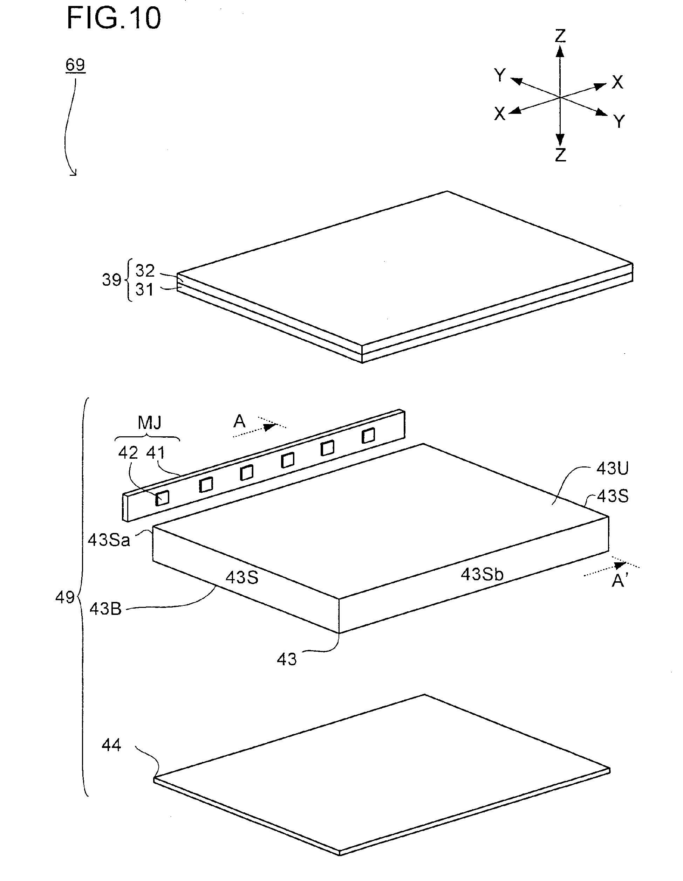

Fig. 10 is an exploded perspective view showing a liquid crystal display device (display device) 69. As shown in this figure, the liquid crystal display device 69 includes: a liquid crystal display panel (display panel) 39; and a backlight unit (illumination device) 49.

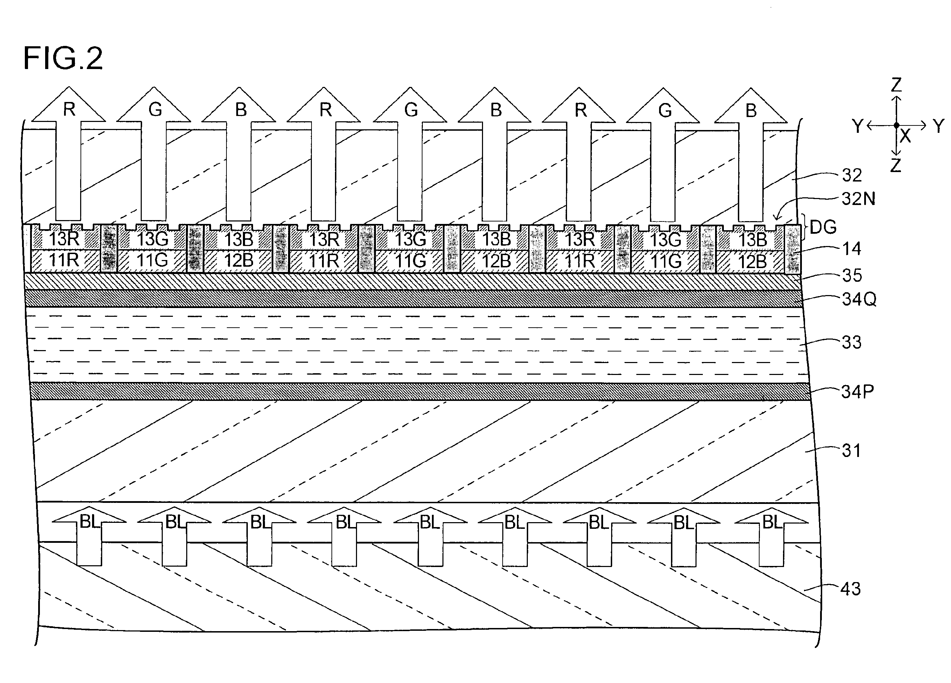

The liquid crystal display panel 39 attaches an active matrix base board 31 that includes switching elements such as a TFT (Thin Film Transistor) and the like, and an opposite base board 32 that faces the active matrix board 31 to each other by means of a seal member (not shown). And, liquid crystal 33 is injected into a gap between both base boards 31, 32 (see Fig. 2 described later). Here, materials of the active matrix base board 31 and the opposite base board (transmission base board) 32 are not especially limited; for example, there is glass (the refractive index nd ≈1.51). Besides, details of the liquid crystal display panel 39 are described later.

The liquid crystal display panel 39 is a non-light emitting type display panel, so that the liquid crystal display panel 39 receives light (backlight BL: see Fig. 2 described later) from the backlight unit 49, thereby fulfilling a display function. Because of this, if the light from the backlight unit 49 is able to be evenly shined onto the entire surface of the liquid crystal display panel 39, the display quality of the liquid crystal display panel 39 improves. Here, in the liquid crystal display device 39, the orientation of the liquid crystal 33 is adjusted, whereby the transmittance of the liquid crystal 33 partially changes (in short, the amount of light supplied to outside changes) and a displayed image changes. Because of this, the liquid crystal (liquid crystal layer) 33 is also called a light-supply amount control portion.

The backlight unit 49 includes: an LED module (light source module) MJ; a light guide plate 43; and a reflection sheet 44.

The LED module MJ is a module that emits light and includes: a mount base board 41; and an LED (Light Emitting Diode) 42 that is mounted on an electrode formed on a mount surface of the mount base board 41 and receives electricity supply to emit light.

Besides, it is desirable that to secure a light amount, the LED module MJ includes a plurality of the LEDs (point light source) 42; further, the LEDs 42 are arranged parallelly in a line. However, in the figure, for convenience, only part of the LEDs 42 are shown (hereinafter, the arrangement direction of the LEDs 42 is also called an X direction.).

Besides, as the light color emitted from the LED 42, there are various colors such as a red, a green and the like: however, the LED 42 in Fig. 10 is a blue light emitting LED 42 that emits blue light (light whose wavelength is from about 400 nm to about 500 nm).

The light guide plate 43 is a plate-shape member that has: a side surface 43S; a top surface 43U and a bottom surface 43B which are so situated as to sandwich the side surface 43S. And, a surface (light receiving surface 43Sa) of the side surface 43S faces a light-emitting end of the LED 42, thereby receiving the light from the LED 42. The received light undergoes multiple reflection in the inside of the light guide plate 43 and goes out as surface light from the top surface (output surface) 43U to outside.

Besides, hereinafter, the side surface 43S opposite to the light receiving surface 43Sa is defined as an opposite surface 43Sb; and the direction from the light receiving surface 43Sa to the opposite surface 43Sb is called a Y direction (especially, this Y direction intersects with the X direction (e.g., intersects at right angles)).

The reflection sheet 44 is so situated as to be covered by the light guide plate 43. And, a surface of the reflection sheet 44 that faces the bottom surface 43B of the light guide plate 43 serves as a reflection surface. Because of this, this reflection surface reflects the light from the LED 42 and the light traveling in the inside of the light guide plate 43 back into the light guide plate 43 without leaking both light (in detail, via the bottom surface 43B of the light guide plate 43).

Here, in the above backlight unit 49, the reflection sheet 44 and the light guide plate 43 are stacked up in this order (here, the stack-up direction is called a Z direction; besides, it is desirable that the X direction, the Y direction and the Z direction are in a relationship to intersect with each other at right angles.). And, the light from the LED 42 is changed to the surface-shape backlight BL by the light guide plate 43 and goes out; the surface light BL reaches the liquid crystal display panel 39, whereby the liquid crystal display panel 39 displays an image.

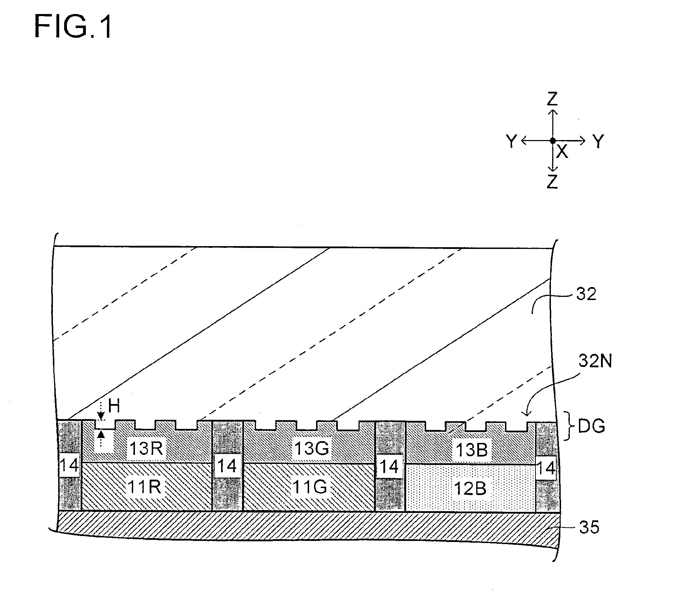

Here, the liquid crystal display panel 39 is described in detail using Fig. 1 to Fig. 10. Fig. 2 is a sectional view seen along an A-A' line in Fig. 10; Fig. 1 is a partially enlarged view of Fig. 2. As shown in Fig. 2, the liquid crystal display panel 39, in addition to the active matrix base board 31 and the opposite base board 32 that sandwich the liquid crystal layer 33, includes: light polarization films 34 (34P, 34Q); a band-pass filter 35; a fluorescent body 11; a scattering body 12; a color filter 13; a black matrix 14; and a diffraction grating DG.

The light polarization films 34 (34P, 34Q) sandwich the liquid crystal layer 33 that is sandwiched by the active matrix base board 31 and the opposite base board 32. In other words, between the liquid crystal layer 33 and the active matrix base board 31, one light polarization film 34P is interposed; and between the liquid crystal layer 33 and the opposite base board 32, the other light polarization film 34Q is interposed.

In detail, the light polarization film 34P transmits specific polarized light of the light which passes through the active matrix base board 31; and guides the specific polarized light to the liquid crystal layer 33. On the other hand, the polarization film 34Q transmits specific polarized light of the light which passes through the liquid crystal layer 33; and guides the specific polarized light to the band-pass filter 35.

The band-pass filter (interference layer) 35 covers the light polarization film 34Q. And, this band-pass filter 35 selectively transmits blue light (B) that passes through the light polarization film 34Q; on the other hand, reflects red light (R) and green light (G) that are contained, for example, in visible light (in short, the band-pass filter 35 interferes with a partial wavelength region of the entire region of visible light.). Here, the band-pass filter 35 is formed by alternately laminating $SiO_2$ (silicon dioxide) and $TiO_2$ (titanium dioxide) on a glass thin film.

The fluorescent body 11 is scattered and disposed on the band-pass filter 35. And, this fluorescent body 11 receives the light (blue light (B)) that passes through the band-pass filter 35 to emit the fluorescent light (accordingly, an excitation wavelength for exciting the fluorescent light is from about 400 nm to about 500 nm.). In detail, the fluorescent body 11 is divided into two categories: one is a red fluorescent body 11R that emits the red light (R) which has a wavelength of about 620 nm; the other is a green fluorescent body 11G that emits the green light (G) which has a wavelength of about 550 nm.

Here, the fluorescent body 11 is not especially limited; however, considering that an edge of one picture element (PIXEL) is about 30 $\mu$m or less, it is desirable that the fluorescent body 11 is formed of particles each having a particle diameter (microparticle material) of 1 $\mu$m or less; for example, there are a nano-particle fluorescent body and an organic fluorescent body.

The scattering body 12, like the fluorescent body 11, is scattered and disposed on the band-pass filter 35. And, this scattering body 12B receives the light (blue ligt (B)) that passes through the band-pass filter 35 to scatter the light (here, the scattering body 12 scatters the blue light (B) that passes through the band-pass filter 35, so that the scattering body 12 is called the scattering body 12B.).

Here, this scattering body 12B, the fluorescent body 11R and the fluorescent body 11G are scattered on the band-pass filter 35; however, it is desirable that they are arranged with a specific regularity. For example, there are: a delta arrangement in which the fluorescent body 11R, the fluorescent body 11G and the scattering body 12B are arranged in a triangular shape; a stripe arrangement in which the fluorescent body 11R, the fluorescent body 11G and the scattering body 12B are alternately arranged in a line; and a mosaic arrangement in which the fluorescent body 11R, the fluorescent body 11G and the scattering body 12B are alternately arranged in a mosaic shape.

Besides, the material and shape of the scattering body 12B are not especially limited. For example, there is a powder, which has transmissiveness to the blue light (B) and is formed of glass, a resin or the like that has a diameter of about 1 $\mu$m, as an example of the material of the scattering body 12B. Besides, as another example, there is a thing that is obtained by roughening the surface of a material such as transparent glass (which has transmissiveness to the blue light (B)) or a resin to form a diffusion surface, which is also the scattering body 12B.

The color filter 13 separately covers the fluorescent body 11R, the fluorescent body 11G and the scattering body 12B. In detail, the color filter 13R, which transmits the red light (R), covers the fluorescent body 11R to be interposed between the fluorescent body 11R and the opposite base board 32. Likewise, the color filter 13G, which transmits the green light (G), covers the fluorescent body 11 G to be interposed between the fluorescent body 11G and the opposite base board 32. Besides, the color filter 13B, which transmits the blue light (B), covers the scattering body 12B to be interposed between the scattering body 12B and the opposite base board 32 (here, the color filter 13 is in tight contact with the opposite base board 32, so that the opposite base board 32 is also called a color filter base board 32).

In other words, the color filters 13R, 13G and 13B, in accordance with the colors of the light that travels from the fluorescent body 11R, the fluorescent body 11G and the scattering body 12B, separately cover them. Because of this, a loss caused by the light passing through the color filter 13 is extremely small (besides, color deepness (color purity) of the light improves). Here, the material of the color filter 13 (13R, 13G and 13B) is not especially limited.

For example, there is an alkali-soluble radical polymerizable negative resist which contains an alkali-soluble polymer, a multi-functional monomer and a pigment ingredient (also inclusive of an ingredient such as a dispersant and the like necessary for pigment dispersion), which is an example of the material of the color filter 13. In a case of the radical polymerizable negative resist that contains a styrene resin as the alkali-soluble polymer, the refractive index nd is from 1.55 to 1.60.

The black matrix (light blocking member) 14 is interposed between the band-pass filter 35 and the opposite base board 32, and separately encloses: the stacked-up fluorescent body 11R and the color filter 13R; the stacked-up fluorescent body 11G and the color filter 13G; and the stacked-up scattering body 12B and the color filter 13B to divide them (here, a divided region serves as a pixel).

And, this black matrix 14 is formed of a metal (e.g., aluminum or silver) that has reflectiveness. Because of this, the light does not travel from one color filter 13 to another color filter 13 via an interface between the color filters 13. In other words, the black matrix 14 secures the light blocking characteristic for every pixel (light-color mixing is prevented.).

The diffraction grating DG is formed on an inside surface 32N that is a light receiving surface of the opposite base board 32 which faces the color filter 13 (e.g., the diffraction grating DG is formed by imprinting method.). In detail, on the inside surface 32N of the opposite base board 32, grating pieces LP are densely disposed, whereby the diffraction grating DG is completed. And, the diffraction grating DG is designed based on a known RCWA method (Rigorous Coupled Wave Theory) and the following relational expression (M1).

$$n2 \cdot \sin\theta2 = n1 \cdot \sin\theta1 + m \cdot \lambda/d \quad \cdots \quad (M1)$$

where
n1: the refractive index of a medium (color filter 13) on the incident side with respect to the inside surface 32N
θ1 (° ): the angle (incident angle) of the light entering the inside surface 32N with respect to the inside surface 32N
n2: the refractive index of a medium (opposite base board 32) on the output side with respect to the inside surface 32N
θ2 (° ): the angle (output angle or reflection angle) of the light refracted at the inside surface 32N with respect to the inside surface 32N
d (nm): the periodic interval of the diffraction grating DG
m: the diffraction order
λ (nm): the light wavelength
(here, if it is conceived that θ1, θ2 are angles that are measured in a YZ plane defined by the Y direction and the Z direction, the understanding is facilitated.)

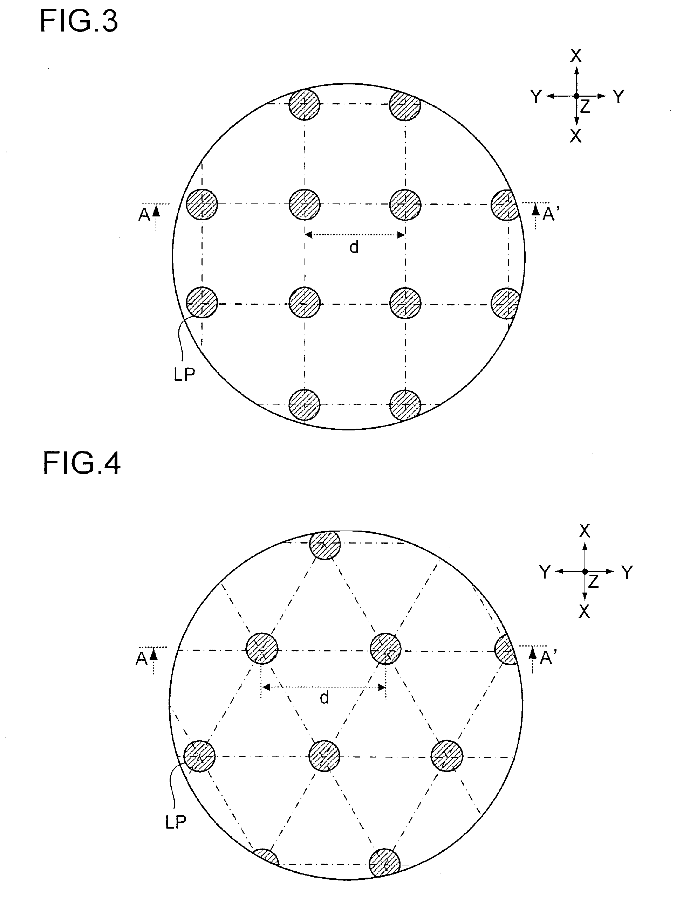

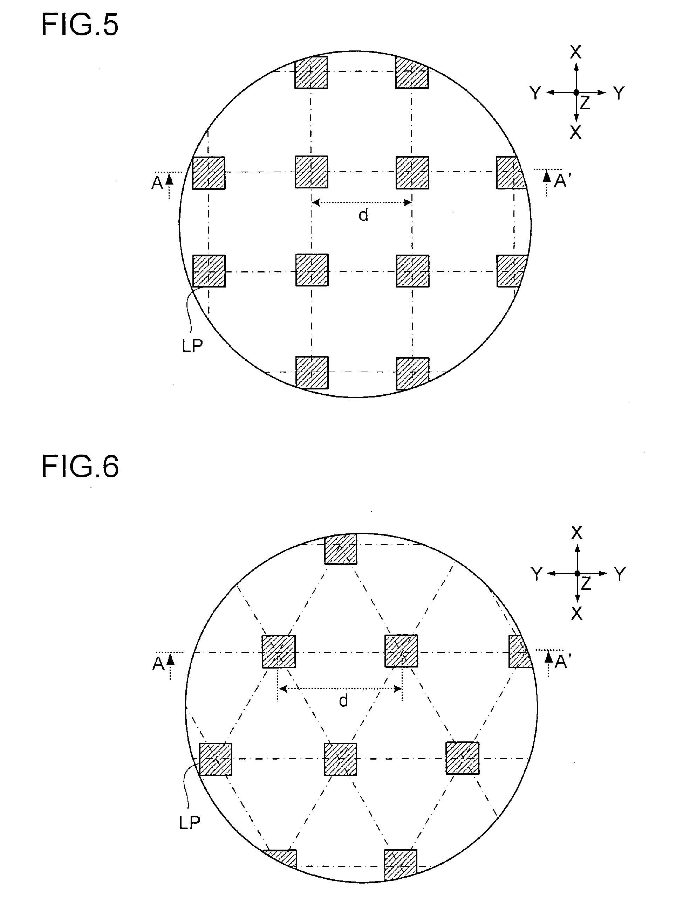

Here, the shape of the grating piece LP of such diffraction grating DG and the disposition (grating pattern of the diffraction grating DG) of the grating piece LP are not especially limited. For example, the shape of the grating piece LP of the diffraction grating DG, as shown in plan views of Fig. 3 and Fig. 4, may be a cylindrical-shape pillar body (cylinder body); or, as shown in plan views of Fig. 5 and Fig. 6, may be a rectangular parallelepiped pillar body (cuboid body) (here, in Fig. 3 to Fig. 6, for convenience, the A-A' line in Fig. 10 is drawn.).

Besides, the disposition (grating pattern: see a one-dot-one-bar line) of the grating pieces LP, as shown in the plan views of Fig. 3 and Fig. 5, may be a quadrangular shape; or, as shown in the plan views of Fig. 4 and Fig. 6, may be a triangular shape (in short, the diffraction grating DG may have a polygonal-shape grating pattern.)

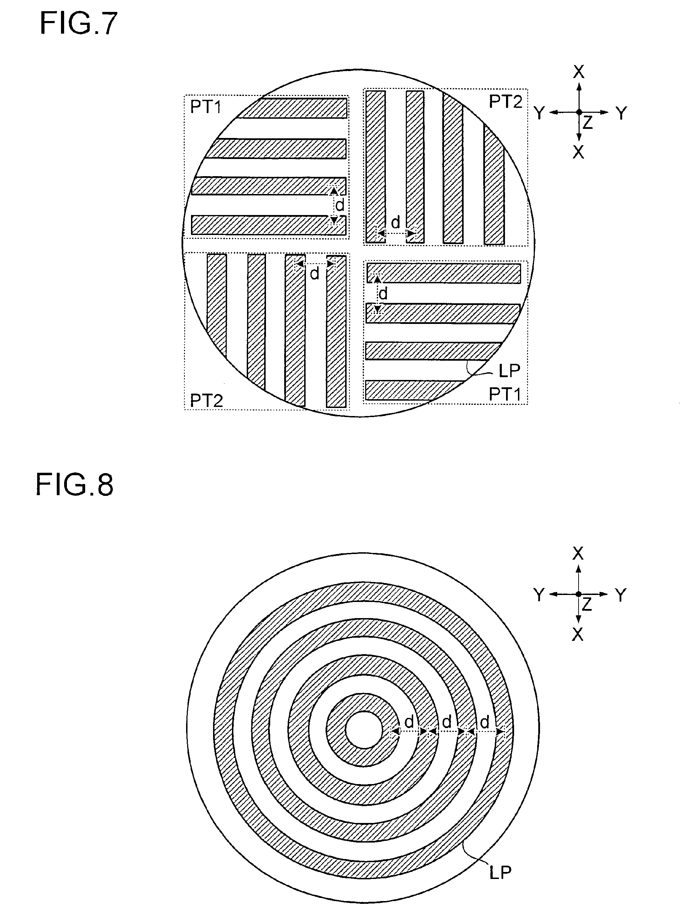

Besides, as shown in a plan view of Fig. 7, the grating piece LP may be a bar-shape body whose longest edge is along the grating surface 32N (surface formed by the grating pieces LP arranged. Here, because it is also possible to say that the grating surface is also the inside surface 32N, the same numbers are attached) of the diffraction grating DG. And, in the case of such bar-shape grating piece LP, two kinds of diffraction patterns (first grating pattern PT1, second grating pattern PT2) having different directions may be included in the diffraction grating DG.

In detail, in the grating piece group composed of the plurality of grating pieces LP, part of the grating pieces LP are arranged along a direction (the X direction, a first direction) that intersects with a longitudinal direction of themselves (e.g., the Y direction), whereby the stripe-shape first grating pattern PT1 is formed. Besides, another part of the grating pieces LP are arranged along a direction (the Y direction, a second direction) that intersects with the parallel-arrangement direction (the X direction) of the grating pieces LP of the first grating pattern PT1, whereby the stripe-shape second grating pattern PT2 is formed. And, the first grating pattern PT1 and the second grating pattern PT2 are arranged neighboring each other in each of the X direction and the Y direction.

Besides, as shown in a plan view of Fig. 8, the grating piece LP that constitutes the diffraction grating DG may be a ring-shape body. And, in the case of such ring-shape grating piece LP, as shown in Fig. 8, the grating pattern may be composed of concentric circles that are formed of a plurality of the ring-shape bodies which share the center with each other.

And, in the cases of the grating patterns shown in Fig. 3 to Fig. 8, as an example, there is the following numerical example:

the periodic interval d of the grating piece LP of the diffraction grating DG = 1000 (nm)
the height H of the grating piece LP from the grating surface 32N of the diffraction grating DG = 500 (nm)

Here, the periodic interval d of the diffraction grating DG is designed to fall in a range of the following relational expression (1) that uses the excitation wavelength $\lambda$ for exciting the fluorescent light:

$$0.5\gamma \leq d \leq 3\gamma \cdots \text{relational expression (1)}$$

Besides, the height H of the grating piece LP is designed to fall in a range of the following relational expression (2) that uses the periodic interval d (see Fig. 1):

$$0.5d \leq H \leq 3d \cdots \text{relational expression (2)}$$

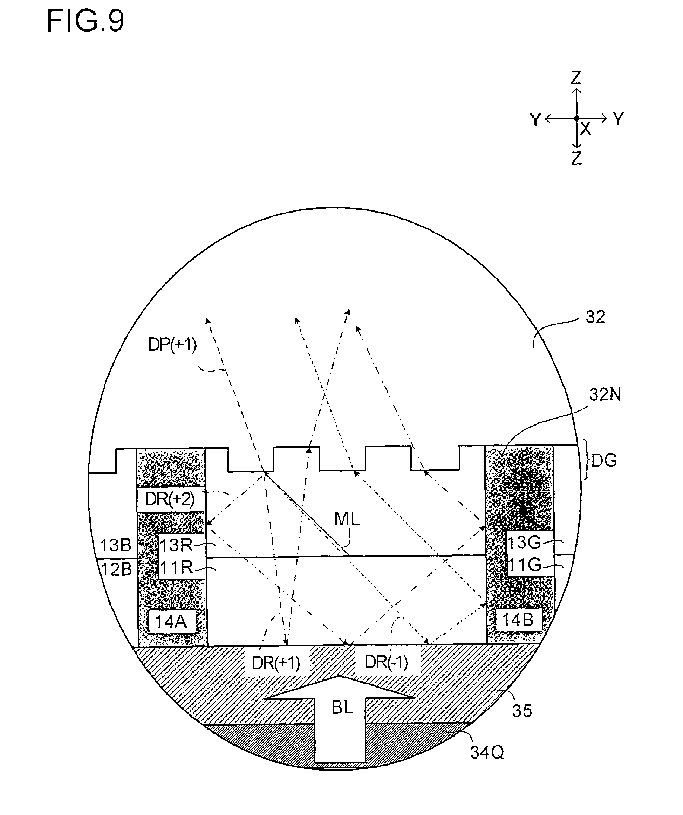

Here, in the case where the above diffraction grating DG is formed on the inside surface 32N of the opposite base board 32, it is described using Fig. 9 what type of behavior the light, which travels from the fluorescent bodies 11R, 11G and the scattering body 12B; and passes through the color filters 13R, 13G and 13 B, shows.

Here, for convenience, only the diffraction grating DG, which is in contact with the color filter 13R that receives the light from the fluorescent body 11R, is described; however, the same light behavior (the light diffracted by the diffraction grating DG) as this description also occurs in: the diffraction grating DG that is in contact with the color filter 13G whcih receives the light from the fluorescent body 11G; and the diffraction grating DG that is in contact with the color filter 13B which receives the light from the scattering body 12B.

Besides, in Fig. 9, for convenience, of the black matrixes 14 that sandwich the fluorescent body 11R and the color filter 13R; and face each other, one is defined as a black matrix 14A and the other is defined as a black matrix 14B.

First, as shown in Fig. 9, it is supposed that part (light ML) of the light from the fluorescent body 11R travels in the inside of the color filter 13R and reaches the inside surface 32N (grating surface 32N), on which the diffraction grating DG is formed, at an incident angle larger than the critical angle (see a solid-line arrow).

In this case, the light ML is diffracted (diffraction transmission and diffraction reflection) with various orders by the diffraction grating DG. In other words, the diffraction grating DG is formed on the inside surface 32N, whereby at the inside surface 32N, the light ML having the incident angle that causes the total reflection shows a behavior other than the total reflection.

For example, as the light that undergoes the diffraction transmission, there is light DP (+1) that undergoes a $1_{st}$-order diffraction transmission. This light DP (+1) is part of the light ML, diffracted and transmitted through the grating surface 32N; and travels to outside via the opposite base board 32 (see a broken-line arrow).

Besides, as the light that undergoes the diffraction reflection, there is, for example: light DR (+1) that undergoes a $1_{st}$-order diffraction reflection; light DR (+2) that undergoes a $2_{nd}$-order diffraction reflection; and light DR (-1) that undergoes a $-1_{st}$-order diffraction reflection.

The light DR (+1), which undergoes the $1_{st}$-order diffraction reflection, is part of the light ML, diffracted and reflected by the grating surface 32N; and travels to the band-pass filter 35 (see a rough one-dot-one-bar line arrow). In detail, the light DR (+1) is diffracted and reflected at a relatively small reflection angle with respect to the grating surface 32N; and travels to the band-pass filter 35 without reaching the black matrix 14A. And, this light DR (+1) reaches the band-pass filter 35 to be totally reflected; travels to the grating surface 32N; and is diffracted and transmitted through the grating surface 32N as it is.

The light DR (+2), which undergoes the $2_{nd}$-order diffraction reflection, is part of the light ML, diffracted and reflected by the grating surface 32N; and travels to the black matrix 14A (see a two-dot-one-bar line arrow). In detail, the light DR (+2) is diffracted and reflected at a relatively large reflection angle (a reflection angle larger than the reflection angle of the light DR (+1) with respect to the grating surface 32N) with respect to the grating surface 32N; and travels to the black matrix 14A.

And, the light DR (+2) is reflected by the black matrix 14A; thereafter, travels to the band-pass filter 35; and is further reflected by the band-pass filter 35. This reflected light DR (+2) travels to the black matrix 14B; is reflected by the black matrix 14B; travels to the grating surface 32N; is diffracted and transmitted through the grating surface 32N as it is (see a two-dot-one-bar line arrow).

The light DR (-1) which undergoes the $-1_{st}$-order diffraction reflection is diffracted and reflected at about the same reflection angle as the incident angle of the light ML with respect to the grating surface 32N (the diffraction reflection occurs such that the light DR (-1) returns to the original point of the travel of the light ML.). And, this diffracted reflected light travels to the band-pass filter 35; and is further reflected by the band-pass filter 35. This reflected light travels to the black matrix 14B; is reflected by the black matrix 14B; thereafter, travels to the grating surface 32N; is diffracted and transmitted through the grating surface 32N as it is (see a fine one-dot-one-bar line arrow).

The above light (diffracted transmitted light, diffracted reflected light) diffracted by the diffraction grating DG occurs even if the light ML enters exceeding the critical angle at the inside surface 32N. And, the diffracted transmitted light passes through the grating surface 32N and exits to outside. Besides, the diffracted reflected light also is reflected by the band-pass filter 35 or by the band-pass filter 35 and the black matrix 14; returns to the grating surface 32N to be diffracted and transmitted; and exits to outside.

Because of this, if the diffraction grating DG is formed on the inside surface 32N of the opposite base board 32 that receives the light derived from the fluorescent light emission, the amount of light exiting from the red color filter 13R becomes relatively large (in other words, the ratio (light output efficiency) of the amount of light exiting to outside to the amount of light emitted from the fluorescent body 11R is relatively high). For example, the light output amount from the liquid crystal display device 69 that incorporates the liquid crystal display panel 39 which includes the grating surface 32N increases about 40 to 42% from the light output amount from the liquid crystal display device 69 that incorporates the liquid crystal display panel 39 which does no have the grating surface 32N.

Accordingly, the liquid crystal display device 69 that incorporates such liquid crystal display panel 39 is able to display an image that secures a specific brightness even if the light emission amount (light emission strength) of the LED 42 is not extremely increased. Besides, in the liquid crystal display device 69, the light emission amount of the LED 42 is not increased, so that the power consumption of the LED 42 also is curbed so much more.

Here, the diffraction grating DG, which increases the above efficiency (exit efficiency) of light output from the inside surface 32N of the opposite base board 32 to outside, also overlaps with the fluorescent body 11G and the color filter 13G. And, by the diffraction grating DG that faces the color filter 13G, like the above description, the light ML is diffracted even if the light ML impinges on the inside surface 32N exceeding the critical angle. And, the diffracted light, like the above description, easily exits from the inside surface 32N to outside.

Besides, by the diffraction grating DG as well that overlaps with the scattering body 12B and the color filter 13B, like the above description, the light ML is diffracted even if the light ML impinges on the inside surface 32N exceeding the critical angle. However, the blue diffracted reflected light (e.g., the light DR (+1), the light DR (+2), and the light DR (-1)) reaches the band-pass filter 35.

The band-pass filter 35 reflects the red light (R) and the green light (G) but transmits the blue light (B). Because of this, the blue diffracted reflected light returns to the liquid crystal layer 33 via the band-pass filter 35.

However, the amount of light that does not return to the liquid crystal layer 33 but is diffracted and transmitted through the grating surface 32N is about the same amount of light that is derived from the fluorescent light emission from the fluorescent bodies 11R, 11G (in other words, in the interest of emission efficiency of the fluorescent light, the fluorescent bodies 11R, 11G are not able to perform the fluorescent light emission whose amount is about the same as the total amount of light from the blue LED 42.). Because of this, the amount of light output from the respective color filters 13R, 13G and 13B becomes about the same as each other. As a result of this, color unevenness of the image displayed by this liquid crystal display device 69 is unlikely to occur.

[Other Embodiments]

Here, the present invention is not limited to the above embodiments, and various modifications are possible without departing from the spirit of the present invention.

For example, hereinbefore, the description is performed using the liquid crystal display panel 39 which includes: the fluorescent bodies 11R, 11G that receive the light, which travels via the liquid crystal layer 33, to perform the fluorescent light emission; the scattering body 12B that receives and scatters the light that travels via the liquid crystal layer 33; and the opposite base board 32 that transmits the light from the fluorescent bodies 11R, 11G and the scattering body 12B. And, in the liquid crystal display panel 39, on the inside surface 32N of the opposite base board 32 that receives the light, the diffraction grating DG, which increases the efficiency of output from the inside surface 32N to outside, is formed.

However, the diffraction grating DG may be so formed as to be able to receive the light from at least one of the fluorescent bodies 11R, 11G and the scattering body 12B. In other words, the diffraction grating DG may not be formed on the entire region of the inside surface 32N of the opposite base board 32. For example, this is because the amount of light from the liquid crystal display panel 39 in which the diffraction grating DG is so disposed as to receive only the light from the fluorescent body 11 increases compared with the amount of light from the liquid crystal display panel 39 that does not have the diffraction grating DG at all.

Besides, the diffraction grating DG is integrally formed with the inside surface 32N of the opposite base board 32; however, this is not limiting, and the diffraction grating DG may be separately formed from the inside surface 32N of the opposite base board 32 (in other words, the separate diffraction grating DG may be disposed to the inside surface 32N of the opposite base board 32.). In short, it is sufficient if the diffraction grating DG is situated in the path (light path) in which the light from the fluorescent body 11 or the scattering body 12B travels to outside.

Besides, the black matrix 14 is formed of the metal (aluminum, silver or the like). However, the black matrix 14 is also able to be formed of a material (e.g., a resin) other than the metal. For example, the band-pass filter may be used as the black matrix 14.

In detail, the band-pass filter 35, which selectively reflects the light that has the same colors as the two different-color color filters 13 disposed in parallel, may be used as the black matrix 14 in the interface between the two different-color color filters 13. For example, as the black matrix 14 that is situated in the interface between the color filter 13R and the color filter 13G, a band-pass filter, which transmits the blue light (B) but reflects the red light (R) and the green light (G), maybe used (in short, a band-pass filter which is able to interfere with a partial wavelength region of the entire wavelength region of visible light). Of course, a band-pass filter, which is able to interfere with the entire wavelength region of visible light, may be used.

According to this, without using an expensive metal material, the black matrix 14 is formed of a relatively inexpensive resin, so that it is possible to achieve cost reduction of the liquid crystal display panel 39 (and the liquid crystal display device 69).

Besides, in the above description, as the member that controls the amount of the light (backlight) supplied from the backlight unit 49 to outside, the liquid crystal layer 33 is used. However, the member that changes the amount of the light supplied to outside is not limited to the liquid crystal layer 33. For example, a MEMS (Micro Electro Mechanical Systems) element may be used as the member (light-supply amount control portion) that changes the amount of the light supplied to outside.

Besides, the light source incorporated in the backlight unit 49 also is not limited to the blue LED 42: an LED 42U which emits ultraviolet rays (a wavelength of 400 nm or less) may be used. However, in a case of such LED 42U, in the liquid crystal display device 69, the band-pass filter 35 transmits the ultraviolet rays (UV) but reflects the light of other wavelengths. Besides, the fluorescent bodies 11R, 11G receive the ultraviolet rays (UV) to perform the fluorescent light emission.

In other words, the fluorescent bodies 11R, 11G, based on the ultraviolet rays (UV), emit the red light (R) and the green light (G). Besides, instead of the scattering body 12B shown in Fig. 1, a fluorescent body 11B, which receives the ultraviolet rays (UV) to perform the fluorescent light emission, is incorporated in the liquid crystal display device 69 (here, the fluorescent body 11B emits the blue light of a wavelength of about 470 nm.).

Besides, the light source incorporated in the liquid crystal display device 69 is not limited to the LED 42, and a light source and the like, which are formed of a fluorescent lamp, a self-light emitting material such as an organic EL (ElectroLuminescence) element or an inorganic EL, may be used. Besides, in addition to the liquid crystal display panel 39, even other display devices (e.g., a plasma display device, an organic EL display device and the like) are able to incorporate the diffraction grating DG.

**Reference Signs List**

| | |
|---|---|
| 11 | fluorescent body |
| 11R | red fluorescent body |
| 11G | green fluorescent body |
| 11B | blue fluorescent body |
| 12B | scattering body |
| 13 | color filter |

| 13R | red color filter |
|---|---|
| 13G | green color filter |
| 13B | blue color filter |
| 14 | black matrix (light blocking member) |
| DG | diffraction grating (light output structure) |
| LP | grating piece |
| PT 1 | first grating pattern |
| PT2 | second grating pattern |
| d | periodic interval of grating piece of diffraction grating |
| 31 | active matrix base board |
| 32 | opposite base board |
| 32N | inside surface (light receiving surface) |
| 33 | liquid crystal (light-supply amount control portion) |
| 34 | light polarization film |
| 35 | band-pass filter |
| 39 | liquid crystal display panel (display panel) |
| MJ | LED module |
| 42 | LED (light source) |
| 43 | light guide plate |
| 44 | reflection sheet |
| 49 | backlight unit |
| 69 | liquid crystal display device (display device) |

**Claims**

1. A display panel comprising:

   a light-supply amount control portion that controls a supply amount of light;
   a fluorescent body that receives the light from the light-supply amount control portion and performs fluorescent light emission; and
   a transmission base board that transmits the light from the fluorescent body;
   wherein on a light receiving surface of the transmission base board that receives the light, a light output structure, which improves output efficiency from the light receiving surface to outside, is formed.

2. The display panel according to claim 1, wherein the light output structure is a diffraction grating.

3. The display panel according to claim 2, wherein a grating piece of the diffraction grating is a pillar body.

4. The display panel according to claim 3, wherein the pillar body is a rectangular parallelepiped body or a circular cylindrical body.

5. The display panel according to any one of claims 2 to 4, wherein the diffraction grating includes a polygonal-shape grating pattern.

6. The display panel according to claim 5, wherein the grating pattern is a triangular shape or a quadrangular shape.

7. The display panel according to claim 2, wherein
   a grating piece of the diffraction grating is a bar-shape body whose longest edge is along a grating surface of the diffraction grating;
   a part of a plurality of the bar-shape bodies are arranged along a first direction that intersects with a longitudinal direction of themselves, whereby a stripe-shape first grating pattern is formed; and
   another part of the plurality of the bar-shape bodies are arranged along a second direction that intersects with the first direction, whereby a stripe-shape second grating pattern is formed.

8. The display panel according to claim 2, wherein
   a grating piece constituting the diffraction grating is a ring-shape body; and the diffraction pattern is composed of concentric circles that are formed of a plurality of the ring-shape bodies which share a center with each other.

9. The display panel according to any one of claims 2 to 8, meeting a relational expression

(1) described below:

$$0.5\gamma \le d \le 3\gamma \cdots \text{relational expression (1)}$$

where
$\gamma$: an excitation wavelength for exciting fluorescent light
d: a periodic interval of the grating piece of the diffraction grating

10. The display panel according to any one of claims 2 to 9, meeting a relational expression (2) described below:

$$0.5d \le H \le 3d \cdots \text{relational expression (2)}$$

where
d: the periodic interval of the grating piece of the diffraction grating H: a height of the grating piece from the grating surface of the
diffraction grating

11. The display panel according to any one of claims 2 to 10, wherein between the diffraction grating and the fluorescent body, a color filter in accordance with a color of the light derived from the fluorescent light emission is interposed.

12. The display panel according to claim 11, wherein the fluorescent body and the color filter are enclosed by a reflective light blocking member.

13. The display panel according to claim 12, wherein the light blocking member is formed of a metal.

14. The display panel according to claim 13, wherein the light blocking member is formed of aluminum or silver.

15. The display panel according to claim 12, wherein the light blocking member is a band-pass filter that is able to interfere with at least a partial wavelength region of an entire region of visible light.

16. A display device comprising:

the display panel according to any one of claims 1 to 15; and
an illumination device that supplies light to the display panel.

# FIG.1

# FIG.2

EP 2 397 885 A1

EP 2 397 885 A1

FIG.3

FIG.4

14

FIG.5

FIG.6

# FIG.7

# FIG.8

# FIG.9

# FIG.10

# FIG.11

## INTERNATIONAL SEARCH REPORT

| | International application No. |
|---|---|
| | PCT/JP2009/068560 |

**A. CLASSIFICATION OF SUBJECT MATTER**
*G02F1/1335(2006.01)i*

According to International Patent Classification (IPC) or to both national classification and IPC

**B. FIELDS SEARCHED**

Minimum documentation searched (classification system followed by classification symbols)
G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 10-319877 A  (Toshiba Corp.),<br>04 December 1998 (04.12.1998),<br>fig. 2<br>& US 6586874 B1 | 1,16<br>2-15 |
| Y<br>A | JP 2008-180936 A  (Nitto Denko Corp.),<br>07 August 2008 (07.08.2008),<br>paragraph [0042]; fig. 6<br>& US 2008/0213508 A1 | 1,16<br>2-15 |
| P,X | JP 2009-115924 A  (Sony Corp.),<br>28 May 2009 (28.05.2009),<br>fig. 6<br>(Family: none) | 1,16 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January, 2010 (21.01.10) | 02 February, 2010 (02.02.10) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2009/068560 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-96547 A (Hitachi Displays, Ltd.), 24 April 2008 (24.04.2008), fig. 13 & US 2008/0084517 A1 | 1-16 |

Form PCT/ISA/210 (continuation of second sheet) (April 2007)

**EP 2 397 885 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4012323 A